(19) **Europäisches Patentamt**
**European Patent Office**
**Office européen des brevets**

(11) **EP 2 093 074 B1**

(12) **EUROPEAN PATENT SPECIFICATION**

(45) Date of publication and mention
of the grant of the patent:
**01.06.2011 Bulletin 2011/22**

(51) Int Cl.:
**B43L 19/00** (2006.01)

(21) Application number: **09000348.4**

(22) Date of filing: **13.01.2009**

(54) **Eraser**

Radierer

Gomme

(84) Designated Contracting States:
**DE ES FR GB IT**

(30) Priority: **19.02.2008 JP 2008037756**

(43) Date of publication of application:
**26.08.2009 Bulletin 2009/35**

(73) Proprietor: **TOMBOW PENCIL CO., LTD.**
**Tokyo 114-8583 (JP)**

(72) Inventor: **Yamada, Noboru**
**Tokyo 114-0003 (JP)**

(74) Representative: **Hager, Thomas Johannes**
**Hoefer & Partner**
**Patentanwälte**
**Pilgersheimer Strasse 20**
**81543 München (DE)**

(56) References cited:
**EP-A1- 0 028 710    JP-A- 8 118 894**
**JP-A- 2005 138 359    JP-A- 2007 021 768**

**Description**

BACKGROUND OF THE INVENTION

FIELD OF THE INVENTION

The present invention relates to an eraser, more precisely to an eraser having excellent erasability and excellent in bleeding resistance and eraser dust gatherability.

BACKGROUND ART

As having excellent erasability, an eraser is widely used as an indispensable one for erasing penciled lines. In general, an eraser is produced by incorporating a plasticizer in a base resin and, if desired, suitably adding thereto other eraser materials such as a stabilizer, a colorant, an aromatic and the like, then mixing and stirring them and shaping the mixture under heat according to a pressing method, an injection-molding method, an extrusion method or the like shaping method.

Plasticizer is used for imparting flexibility, durability, cold resistance, electric characteristics and others to various base resins; but in erasers, plasticizer having an affinity for the substances to be erased, graphite and the like is much used from the viewpoint of the erasability thereof. As described above, an eraser contains various kinds of plasticizer in large quantities; and therefore, when the eraser is kept in contact with resin shaped articles, then the plasticizer therein may bleed away to dissolve and corrode the articles.

An erasing operation with an eraser is as follows: An eraser is brought into close contact with writing and rubs it so that the writing is adsorbed by the eraser. By further rubbing, the surface part of the eraser having adsorbed the writing is released as an eraser dust from the eraser itself, whereby the surface of the eraser is renewed. In case where the erasing operation does not produce any eraser dust, the eraser surface could not be renewed, and the writing may remain on the eraser surface, therefore causing a problem in that the erased area is soiled. Accordingly, in using an eraser, the formation of eraser dust is indispensable. However, the eraser dust formed soils the top of a desk and causes a problem in that it interferes with writing.

To solve the above-mentioned problems, for example, JP-A 9-66699 and JP-A 2003-105150 have proposed an eraser improved in point of the bleeding resistance and the eraser dust gatherability. However, though an eraser having an erasability on the same level as that of conventional ones and excellent in bleeding resistance and eraser dust gatherability is desired, it is in general difficult to satisfy both the bleeding resistance and the eraser dust gatherability.

Patent Reference 1: JP-A 9-66699
Patent Reference 2: JP-A 2003-105150

Erasers comprising a base resin and a plasticizer are also known from the following documents: JP 08 118894 A, EP 0 028 710 A, JP 2007 021768 A, JP 2005 138359 A.

SUMMARY OF THE INVENTION

An object of the invention is to provide an eraser excellent in bleeding resistance and eraser dust gatherability, not detracting from the erasability thereof.

To solve the above-mentioned problems, the eraser of the invention comprises a base resin and, as incorporated therein as a plasticizer, a liquid acrylic polymer having a glass transition point (Tg) of not higher than 0°C, wherein the glass transition point is measured according to a DSC method. In the eraser, preferably, the liquid acrylic polymer accounts for from 20 to 200 parts by mass relative to 100 parts by mass of the base resin.

The eraser of the invention also comprises a base resin and, as incorporated therein, the above-mentioned liquid acrylic polymer and preferably any other plasticizer than the liquid acrylic polymer. In the eraser, preferably, the liquid acrylic polymer accounts for from 4 to 160 parts by mass and the other plasticizer than the liquid acrylic polymer accounts for from 40 to 196 parts by mass, relative to 100 parts by mass of the base resin. More preferably, the proportion of the liquid acrylic polymer in the total plasticizer is at least 20 % by mass.

In the eraser of the invention, more preferably, the weight-average molecular weight (Mw) of the liquid acrylic polymer is from 1,000 to 6,000, the viscosity thereof is from 300 to 11,000 (mPa·s/25°C), and the glass transition point Tg thereof is not higher than -30°C.

Preferably, in the eraser of the invention, the base resin is a vinyl chloride resin.

As described in the above, the invention provides an eraser that is very handy and is excellent in bleeding resistance and eraser dust gatherability, by incorporating a liquid acrylic polymer to the base resin. In addition, the eraser of the invention has high safety and good environmental pollution resistance.

DESCRIPTION OF THE PREFERRED EMBODIMENTS

The base resin for use in the invention includes vinyl chloride resin, vinyl acetate resin, ethylene-vinyl acetate copolymer resin, acrylate resin, polyisoprene (natural rubber), and styrene, butadiene, isoprene, ethylene-propylene, nitrile, chloroprene, urethane, acrylic, polyester and olefin elastomers, etc. One or more these base resins may be used herein either singly or as combined. Of those resins, preferred is vinyl chloride resin as easily miscible with plasticizer and excellent in erasability.

As the vinyl chloride resin, all vinyl chloride resins heretofore used in the art can be used, including, for example, polyvinyl chloride having a degree of polymerization of from 400 to 3000 or so, and vinyl chloride-vinyl acetate copolymer, polyvinylidene chloride, vinyl chloride-methyl acrylate copolymer, vinyl chloride-methyl methacrylate copolymer, and vinyl chloride-octyl acrylate copolymer. One or more of these may be used either singly or as combined. As the vinyl chloride resin, preferred is a paste resin as readily miscible with plasticizer and as readily workable.

The liquid acrylic polymer for use in the invention has a glass transition point (Tg) of not higher than 0°C, as measured according to a DSC method. Having a lower glass transition point (Tg), the polymer can be more readily handled in kneading and stirring and can be more readily shaped; and therefore, Tg of the polymer is more preferably not higher than about -30°C.

The liquid acrylic polymer for use in the invention may have a weight-average molecular weight (Mw) of from 1000 to 6000, concretely including ARUFON UP-1000, UP-1010, UP-1021, UP-1061, UP-1080, UP-1190 (all trade names by Toa Gosei), ACTFLOW UMB-1001, UME-1001, UMM-1001 (all trade names by Soken Chemical & Engineering), etc. One or more of these may be used either singly or as combined.

Preferably, the liquid acrylic polymer has a viscosity of from 300 to 11,000 (mPa·s/25°C), more preferably from 300 to 5,000, even more preferably from 300 to 2,000. When the viscosity of the liquid acrylic polymer is too high, then the handlability thereof in kneading and stirring may be poor and the shapability thereof may also be poor.

Regarding the amount of the liquid acrylic polymer in the eraser of the invention, the liquid acrylic polymer preferably accounts for from 20 to 200 parts by mass relative to 100 parts by mass of the base resin, more preferably from 50 to 180 parts by mass. When the amount of the liquid acrylic polymer is less than 20 parts by mass, then the eraser may be hard and its elasticity may lower and its erasability may be poor; but on the other hand, when the amount is more than 200 parts by mass, the shapability thereof may be poor and the eraser would be of no use.

The liquid acrylic polymer may be combined with any other plasticizer for use herein. When the liquid acrylic polymer is combined with some other plasticizer, it may improve the other plasticizer bleeding resistance and the eraser dust gatherability; and in addition, when the liquid acrylic polymer having a relatively high viscosity is combined with a low-viscosity plasticizer, then the viscosity of the total plasticizer may lower, therefore providing an economical eraser excellent in handlability in kneading and stirring and in shapability.

The plasticizer that may be combined for use herein includes, for example, phthalate plasticizers such as di-2-ethylhexyl phthalate (DOP), di-n-octyl phthalate (n-DOP), diisononyl phthalate (DINP), dinonyl phthalate (DNP), diisodecyl phthalate (DIDP), ditridecyl phthalate (DTDP), diundecyl phthalate (DUP), etc.; trimellitate plasticizers such as tri-2-ethylhexyl trimellitate (TOTM), triisodecyl trimellitate (TIDTM), tri-isooctyl trimellitate (TIOTM), tri-isononyl trimellitate, etc.; pyromellitate plasticizers such as trioctyl pyromellitate (TOPM), etc.; polyester plasticizers having a molecular weight of not lower than 1000; epoxy plasticizers such as epoxidated triglyceride, epoxidated fatty acid monoester, epoxydated soybean oil, epoxydated linseed oil, epoxydated fatty acid ester, and epoxy-hexahydrophthalate ester, e.g., di-2-ethylhexyl epoxy-hexahydrophthalate (E-PS), di-n-octyl epoxy-hexahydrophthalate (nE-PS), diepoxystearyl epoxy-hexahydrophthalate (E-PO), etc.; adipate plasticizers such as di-2-ethylhexyl adipate (DOA), diisononyl adipate (DINA), diisodecyl adipate (DIDA), etc.; sebacate plasticizers such as di-2-ethylhexyl sebacate (DOS), dibutyl sebacate (DBS), etc.; azelate plasticizers such as di-2-ethylhexyl azelate (DOZ), etc.; phosphate plasticizers such as tricresyl phosphate (TCP), tri-2-ethylhexyl phosphate (TOP), etc.; citrate plasticizers such as triethyl citrate, acetyl-tri-n-butyl citrate, tri-n-butyl citrate, acetyl-triethyl citrate, acetyl-tri-(2-ethylhexyl) citrate, etc.; and phenyl alkylsulfonates such as Mesamol, Mesamol II (both trade names by Bayer), etc. One or more of these may be used either singly or as combined, if desired. Of those plasticizers, preferred are phthalate plasticizers, adipate plasticizers, sebacate plasticizers, azelate plasticizers, citrate plasticizers, and phenyl alkylsulfonates.

In case where a liquid acrylic polymer is combined with any other plasticizer, the total amount of the plasticizer is preferably at most 200 parts by mass relative to 100 parts by mass of the base resin; and regarding the proportion of the plasticizers to be combined, preferably, the liquid acrylic polymer accounts for from 4 to 160 parts by mass, and the other plasticizer than liquid acrylic polymer accounts for from 40 to 196 parts by mass. When the total amount of the plasticizer is over 200 parts by mass, then the eraser may be too soft and its erasabilitymay lower. In case where the other plasticizer is incorporated, the proportion of the liquid acrylic polymer to the total plasticizer is preferably at least 2 % by mass, but more preferably at least 20 % by mass, even more preferably at least 50 % by mass. When the liquid acrylic polymer is combined with a plasticizer having relatively good bleeding resistance and eraser dust gatherability, its amount may be small; but when combined with a plasticizer having relatively poor bleeding resistance and eraser dust gatherability, its amount is preferably large.

In case where a liquid acrylic polymer is incorporated in rubber and elastomer, a softener such as a petroleum oil, a liquid rubber, a liquid oligomer or the like may be used along with them. The petroleum oil includes an extender oil that is a mixture of a paraffinic hydrocarbon oil, a naphthenic hydrocarbon oil and an aromatic hydrocarbon oil, as well as a process oil, a spindle oil, a machine oil, a liquid paraffin, a chloroparaffin, etc. The liquid rubber includes a liquid polybutadiene, a liquid polyisoprene, etc. The liquid oligomer includes a liquid polybutene, a liquid α-olefin oligomer, etc. Not specifically defined, the amount of the softener to be incorporated is preferably from 30 to 300 parts by mass relative to 100 parts by mass of the base resin.

A filler may be incorporated in the eraser of the invention for imparting a suitable hardness thereto. As the filler, generally used is a silica rock powder or a limestone powder. The inorganic powder is used after finely powdered so as not to damage the writing surface. In addition, also usable are diatomaceous earth, talc or Shirasu powder, as well as aerosil that is a fine powder of silicon oxide, and inorganic and organic hollow particles, etc. Not specifically defined, the amount of the filler to be incorporated is preferably from 30 to 250 parts by mass relative to 100 parts by mass of the base resin. However, it may be said that the filler content may have some influences on the necessary function and property of eraser, for example, the degree of erasure and the degree of eraser dust release, and therefore may have significant influences on the erasability of eraser.

If desired, a stabilizer may be used for the purpose of preventing the vinyl chloride resin from being degraded at high temperatures. Preferably, the amount of the stabilizer to be incorporated is from 0 to 10 parts by mass relative to 100 parts by mass of the base resin. A light stabilizer such as a UV absorbent may also be incorporated. In addition, other additives such as a viscosity improver, a lubricant, a solvent, a colorant, a preservative, an antifungal, an aromatic, etc. may also be incorporated. Falling within a range not detracting from the effect of the invention, the amount of these additives to be incorporated is not specifically defined.

EXAMPLES

The invention is described more concretely with reference to the following Examples and Comparative Examples; however, the invention should not be limited to the following Examples.

Materials used in the following Examples and Comparative Examples are shown in Table 1. In the following description, "part" is "by mass" unless otherwise specifically indicated.

Table 1

| Material | Chemical Name | Trade Name (manufacturer), etc. |
|---|---|---|
| Base Resin | polyvinyl chloride (PVC) resin | degree of polymerization: 1600 |
| Filler | heavy calcium carbonate | - |
| Plasticizer | liquid acrylate polymer | ARUFON UP-1021 (by Toa Gosei) viscosity, 400 mPa·s/25°C Mw: 1600 Tg: -71°C |
| | | ARUFON UP-1061 (by Toa Gosei) viscosity, 550 mPa·s/25°C Mw: 1600 Tg: -60°C |
| Plasticizer | dibutyl sebacate (DBS) | - |
| Plasticizer | tri-2-ethylhexyl trimellitate (TOTM) | - |
| Stabilizer | metal stearate mixture | - |

The erasability, the eraser dust gatherability and the bleeding resistance of the samples obtained in the following Examples and Comparative Examples were determined or evaluated according to the methods mentioned below.

[Method for Determination of Erasability (JIS S 6050)]

(1) A sample is cut into a sheet having a thickness of 5 mm, which is then worked so that its part to be in contact with test paper may have an arc shape having a radius of 6 mm, and this is used as a test piece.

(2) The test piece is kept in contact with color paper vertically thereto in such a manner that it can be vertical to the colored line on the paper; then a weight is put on the test piece in such a manner that the total mass of the weight and the holder can be 0.5 kg, and the test piece is rubbed back-and-fourth 4 times in total at a speed of $150 \pm 10$ cm/min.

(3) Using a densitometer, the density of the colored area and that of the erased area are measured, based on the density of the non-colored area, 0, of the color paper.

(4) The degree of erasure is computed according to the following formula. The data of three test pieces tested as above are averaged.

```
Degree of Erasure (%)

= (1 - (concentration of erased area)/(concentration of

colored area)) × 100.
```

[Test Method for Eraser Dust Gatherability]

A test piece is rubbed back-and-fourth 10 times in total under an erasing load of 500 gf, and the mass of the largest eraser dust is divided by the mass of the test piece loss, which is then multiplied by 100. The resulting value indicates the degree of gathered eraser dust (%). The mass of the dust is measured three times for each one formulation, and the data are averaged.

```
Degree of Gathered Eraser Dust (%)

= [mass of largest dust/(mass of test piece before test - mass of test piece after test)] × 100.
```

[Method for Evaluation of Bleeding Resistance (JIS S 6050 4.3)]

The bleeding test is as follows: A pencil is cut into 40 mm. Thus cut, two pencils are put on a test piece (eraser) having a length of 35 mm, a width of at least 15 mm and a thickness of at least 5 mm, in parallel to each other (relative to the long side of the test piece), and a 20-g weight is put on it. This is then put into a thermostat at $60 \pm 2°C$, then taken out after 1 hour, and checked as to whether the paint of the pencils has adhered to the test piece. Based on the standard mentioned below, the thus-tested test piece is evaluated.

A: No paint adhered to the test piece.
B: A trace of the pencils remained on the test piece.
C: The paint of the pencils adhered to the test piece.

(Examples 1 to 5, Comparative Examples 1 to 4)

A resin composition having a formulation shown in Table 2 was mixed and stirred, then defoamed in vacuum, cast into a mold having a size of 100 x 100 x 10 mm kept heated at 120 to 140°C, and heated therein for 30 minutes, then cooled, and taken out of the mold. Each sample was tested for the degree of erasure, the eraser dust gatherability and the bleeding resistance according to the methods mentioned in the above, and the results are shown in Table 2.
Table 2

| | | Comparative Example | | | | Example | | | | |
|---|---|---|---|---|---|---|---|---|---|---|
| | | 1 | 2 | 3 | 4 | 1 | 2 | 3 | 4 | 5 |
| Composition (part) | PVC | 100 | 100 | 100 | 100 | 100 | 100 | 100 | 100 | 100 |
| | CaCO$_3$ | 100 | 100 | 100 | 100 | 100 | 100 | 100 | 100 | 100 |
| | UP-1021 | - | - | - | - | 160 | 120 | 40 | - | - |
| | UP-1061 | - | - | - | - | - | - | - | 160 | 80 |
| | DBS | 160 | - | 120 | 40 | - | 40 | 120 | - | - |
| | TOTM | - | 160 | 40 | 120 | - | - | - | - | 80 |
| | Stabilizer | 2 | 2 | 2 | 2 | 2 | 2 | 2 | 2 | 2 |
| Molding Temperature and Degree of Erasure | 120°C | 96 % | - | 96 % | 94 % | - | 92 % | 96 % | 94% | - |
| | 130°C | 93% | 91% | 96 % | 96 % | 91% | 96 % | 96 % | 97% | 91 % |
| | 140°C | 88 % | 96 % | 92% | 96 % | 96 % | 96 % | 93% | 93 % | 95 % |
| Gatherability (%) | | 18 % | 64 % | 32 % | 55 % | 77 % | 60% | 36 % | 80 % | 73 % |
| Bleeding Resistance | | C | A | B | A | A | A | B | A | A |

As is obvious from Table 2, it is known that, when a liquid acrylic polymer is incorporated as a plasticizer, then an eraser excellent in bleeding resistance and eraser dust gatherability can be obtained. It is also known that, when a liquid acrylic polymer is combined with some other plasticizer, it improves the bleeding resistance and the eraser dust gatherability of the eraser, as compared with the eraser that comprises a conventional ester plasticizer alone.

## Claims

1. An eraser comprising a base resin **characterized in that** incorporated therein as a plasticizer is a liquid acrylic polymer having a glass transition point (Tg) of not higher than 0°C, wherein the glass transition point is measured according to a DSC method.

2. The eraser as claimed in claim 1, wherein the liquid acrylic polymer accounts for from 20 to 200 parts by mass relative to 100 parts by mass of the base resin.

3. The eraser as claimed in claim 1 or 2, comprising, as incorporated therein, any other plasticizer than the liquid acrylic polymer.

4. The eraser as claimed in claim 3, wherein the liquid acrylic polymer accounts for from 4 to 160 parts by mass and the other plasticizer than the liquid acrylic polymer accounts for from 40 to 196 parts by mass, relative to 100 parts by mass of the base resin.

5. The eraser as claimed in claim 3 or 4, wherein the proportion of the liquid acrylic polymer in the total plasticizer is at least 20 % by mass.

6. The eraser as claimed in any one of claims 3 to 5, wherein the other plasticizer than the liquid acrylic polymer is at least one selected from phthalate plasticizers, trimellitate plasticizers, pyromellitate plasticizers, polyester plasticizers, epoxy plasticizers, adipate plasticizers, sebacate plasticizers, azelate plasticizers, phosphate plasticizers, citrate plasticizers, and phenyl alkylsulfonates.

7. The eraser as claimed in any one of claims 1 to 6, wherein the weight-average molecular weight (Mw) of the liquid acrylic polymer is from 1,000 to 6,000.

8. The eraser as claimed in any one of claims 1 to 7, wherein the viscosity of the liquid acrylic polymer is from 300 to 11,000 mPa·s at 25°C.

9. The eraser as claimed in any one of claims 1 to 8, wherein the glass transition point Tg of the liquid acrylic polymer is not higher than -30°C.

10. The eraser as claimed in any one of claims 1 to 9, wherein the base resin is a vinyl chloride resin.

**Patentansprüche**

1. Radierer, umfassend ein Basisharz, **dadurch gekennzeichnet, dass** darin, als ein Weichmacher, ein flüssiges Acrylpolymer mit einem Glasübergangspunkt (Tg) von nicht höher als 0°C integriert ist, wobei der Glasübergangspunkt gemäß einem DSC-Verfahren gemessen wird.

2. Radierer nach Anspruch 1, wobei das flüssige Acrylpolymer 20 bis 200 Masseanteile in Bezug auf 100 Masseteile des Basisharzes ausmacht.

3. Radierer nach Anspruch 1 oder 2, umfassend, darin integriert, einen anderen Weichmacher als das flüssige Acrylpolymer.

4. Radierer nach Anspruch 3, wobei das flüssige Acrylpolymer 4 bis 160 Masseanteile und der andere Weichmacher als das flüssige Acrylpolymer 40 bis 196 Masseanteile in Bezug auf 100 Masseanteile des Basisharzes ausmacht.

5. Radierer nach Anspruch 3 oder 4, wobei der Anteil des flüssigen Acrylpolymers in dem gesamten Weichmacher zumindest 20 Masse% ist.

6. Radierer nach einem der Ansprüche 3 bis 5, wobei der andere Weichmacher als das flüssige Acrylpolymer zumindest einer ausgewählt aus Phthalat-Weichmacher, Trimellitat-Weichmacher, Pyromellitat-Weichmacher, Polyester-Weichmacher, Epoxyd-Weichmacher, Adipinat-Weichmacher, Sebacat-Weichmacher, Azelat-Weichmacher, Phosphate-Weichmacher, Citrat-Weichmacher und Phenylalkylsulfonat ist.

7. Radierer nach einem der Ansprüche 1 bis 6, wobei das durchschnittliche Molekulargewicht (Mw) des flüssigen Acrylpolymers zwischen 1000 und 6000 liegt.

8. Radierer nach einem der Ansprüche 1 bis 7, wobei die Viskosität des flüssigen Acrylpolymers zwischen 300 und 11000 mPa·s bei 25 °C liegt.

9. Radierer nach einem der Ansprüche 1 bis 8, wobei der Glasübergangspunkt Tg des flüssigen Acrylpolymers nicht höher als -30° C ist.

10. Radierer nach einem der Ansprüche 1 bis 9, wobei das Basisharz ein Vinylchloridharz ist.

**Revendications**

1. Gomme comprenant une résine de base **caractérisée en ce qu'**elle incorpore, en tant que plastifiant, un polymère acrylique liquide ayant un point de transition vitreuse (Tg) inférieur ou égal à 0 °C, le point de transition vitreuse étant mesuré conformément à une méthode DSC.

2. Gomme selon la revendication 1, dans laquelle le polymère acrylique liquide représente de 20 à 200 parties en poids par rapport à 100 parties en poids de la résine de base.

3. Gomme selon la revendication 1 ou 2 comprenant, incorporée dans celle-ci, un quelconque autre plastifiant qui n'est pas le polymère acrylique liquide.

4. Gomme selon la revendication 3, dans laquelle le polymère acrylique liquide représente de 4 à 160 parties en poids et l'autre plastifiant qui n'est pas le polymère acrylique liquide représente de 40 à 196 parties en poids, par rapport à 100 parties en poids de la résine de base.

5. Gomme selon la revendication 3 ou 4, dans laquelle la proportion du polymère acrylique liquide dans le plastifiant total est d'au moins 20 % en poids.

6.  Gomme selon l'une quelconque des revendications 3 à 5, dans laquelle l'autre plastifiant qui n'est pas le polymère acrylique liquide est au moins choisi parmi les plastifiants de type phtalate, les plastifiants de type trimellitate, les plastifiants de type pyromellitate, les plastifiants de type polyester, les plastifiants de type époxy, les plastifiants de type adipate, les plastifiants de type sébacate, les plastifiants de type azélate, les plastifiants de type phosphate, les plastifiants de type citrate et les alkylsulfonates de phényle.

7.  Gomme selon l'une quelconque des revendications 1 à 6, dans laquelle la masse moléculaire moyenne en masse (Mm) du polymère acrylique liquide est de 1 000 à 6 000.

8.  Gomme selon l'une quelconque des revendications 1 à 7, dans laquelle la viscosité du polymère acrylique liquide est de 300 à 11 000 mPa.s à 25 °C.

9.  Gomme selon l'une quelconque des revendications 1 à 8, dans laquelle le point de transition vitreuse Tg du polymère acrylique liquide n'est pas supérieur à -30 °C.

10. Gomme selon l'une quelconque des revendications 1 à 9, dans laquelle la résine de base est une résine de chlorure de vinyle.

## REFERENCES CITED IN THE DESCRIPTION

**Patent documents cited in the description**

- JP 9066699 A
- JP 2003105150 A
- JP 8118894 A
- EP 0028710 A
- JP 2007021768 A
- JP 2005138359 A